# FASCICULE DE BREVET EUROPEEN

(11) **EP 0 928 559 B1**
(45) Date de publication et mention de la délivrance du brevet: **14.04.2004**
(21) Numéro de dépôt: 99400027.1
(22) Date de dépôt: 07.01.1999
(51) Int. Cl.: A21C 11/12

(54) **dispositif et procédé pour scarifier des pâtons de pain ou analogues**
Vorrichtung und Verfahren zum Schlitzen von Brotteigstücken oder dergleichen
Apparatus and process for slitting pieces of bread dough or the like

(30) Priorité: 12.01.1998 FR 9800202
(43) Date de publication de la demande: 14.07.1999
(73) Titulaire: MATFOUR, 45800 St. Jean de Braye (FR)
(72) Inventeur: Ambroise Casterot, Michel, 33000 Bordeaux (FR); Ambroise Casterot, Laurent, 33000 Bordeaux (FR)
(74) Mandataire: Chaillot, Geneviève

(56) Documents cités:
- EP-A- 0 682 871
- EP-A- 0 717 930
- FR-A- 2 269 865
- FR-A- 2 740 943

## Description

La présente invention concerne un dispositif et un procédé pour scarifier des pâtons de pain ou analogues, c'est-à-dire réaliser des entailles à la surface des pâtons avant leur mise en cuisson dans un four.

Ces entailles, de faible profondeur, sont nécessaires pour assurer une levée correcte du pain lors de la cuisson et sont habituellement réalisées à la main par le boulanger, ce qui rend l'opération fastidieuse.

On connaît par la demande de brevet FR-A1-2 740 943 une machine à grigner des produits de boulangerie ou de viennoiserie disposés dans un filet comportant une pluralité d'alvéoles. Cette machine permet de grigner les produits contenus dans un seul filet et oblige le boulanger à manipuler chacun des filets.

On connaît encore par la demande de brevet EP-A1-0 682 871 un dispositif de coupe pour scarifier des pâtons disposés dans un chariot, le chariot étant inséré en diagonale dans une structure comportant des lames simplement mobiles entre une position relevée permettant la mise en place des pâtons et une position basse de travail.

L'invention vise à remédier à cet inconvénient en proposant un nouvel ensemble tel que défini dans la revendication 1.

La lame est de préférence montée avec une possibilité de déplacement vertical relatif par rapport au bras et de préférence le dispositif comporte des moyens de relevage de la lame.

Dans une réalisation préférée, la lame est fixée sur un organe de support pouvant pivoter librement vers le haut autour d'un axe géométrique de rotation parallèle à l'axe longitudinal du bras.

Dans une réalisation préférée, l'organe de support est assujetti à une tige de commande latérale s'étendant le long du bras d'un côté de celui-ci.

Toujours dans une réalisation préférée, le dispositif comporte une pluralité de bras identiques espacés verticalement et solidaires d'une colonne, ces bras étant positionnés sur la colonne de manière à pouvoir s'engager entre les plateaux du chariot, les moyens d'entraînement étant agencés de manière à pouvoir déplacer ladite colonne dans deux directions perpendiculaires entre elles.

De préférence, chaque tige de commande s'étendant le long d'un bras est solidaire d'un levier de commande s'étendant transversalement à son axe, et la colonne comporte au moins une tringle déplaçable verticalement, cette tringle présentant des butées sur lesquelles sont aptes à reposer les leviers de commande des bras, de sorte que le déplacement de la tringle vers le haut provoque l'entraînement en rotation de l'ensemble des leviers de commande dans le même sens et le déplacement vers le haut de toutes les lames situées d'un même côté des bras.

De préférence, les moyens de commande font accomplir à chaque lame une succession de déplacements élémentaires. Pour chacun de ces déplacements élémentaires la lame effectue un premier déplacement d'une distance prédéterminée dans une direction parallèle à l'axe longitudinal du bras et d'une distance prédéterminée également dans une direction perpendiculaire à cet axe, la lame étant apte durant ce premier déplacement à venir au contact du pâton pour le scarifier, la lame étant ensuite déplacée vers le haut et le bras portant cette lame étant soumis alors à un deuxième déplacement d'une distance prédéterminée et de sens opposé dans la direction perpendiculaire à l'axe longitudinal du bras et d'une distance correspondant à l'espacement des pâtons sur le plateau et de même sens selon l'axe longitudinal du bras.

Dans une réalisation préférée, chaque bras comporte deux lames respectivement situées de chaque côté du bras et pouvant être commandées dans leur déplacement vertical indépendamment l'une de l'autre.

L'invention a également pour objet un procédé pour scarifier une pluralité de pâtons disposés sur des plateaux situés à des hauteurs différentes sur un chariot, à l'aide du dispositif tel que précité.

Grâce à l'invention, il n'est plus nécessaire de sortir les plateaux du chariot pour scarifier individuellement tour à tour les pâtons, puisqu'il suffit d'amener le chariot au voisinage du dispositif dans une position relative prédéterminée et d'attendre que le dispositif ait scarifié de façon automatique l'ensemble des pâtons.

Par ailleurs, les plateaux ont tendance à se gondoler sous l'effet des contraintes thermiques engendrées par la cuisson, de sorte qu'ils ne coulissent pas toujours parfaitement dans les glissières correspondantes prévues sur le chariot.

Le dispositif selon l'invention, qui permet d'éviter de sortir les plateaux du chariot, évite les difficultés liées à la remise en place des plateaux sur le chariot.

Grâce à l'invention, l'utilisateur peut en outre facilement programmer les moyens de commande de manière à choisir le nombre d'entailles par pâton, le nombre de pâtons par plateau devant être scarifiés et l'angle donné à ces entailles par rapport à l'axe longitudinal des pâtons.

D'autres caractéristiques et avantages de la présente invention apparaîtront à la lecture de la description détaillée qui va suivre, d'un exemple de réalisation non limitatif de l'invention, et à l'examen du dessin annexé sur lequel :
- la figure 1 est une vue schématique en perspective d'un dispositif conforme à un exemple de réalisation de l'invention,
- la figure 2 est une vue schématique en perspective, partielle, représentant le mécanisme d'entraînement d'un bras,
- la figure 3 est une vue de face d'un bras,
- la figure 4 est une vue de dessus, partielle, d'un bras, et
- la figure 5 illustre le déplacement d'un bras pour scarifier une succession de pâtons.

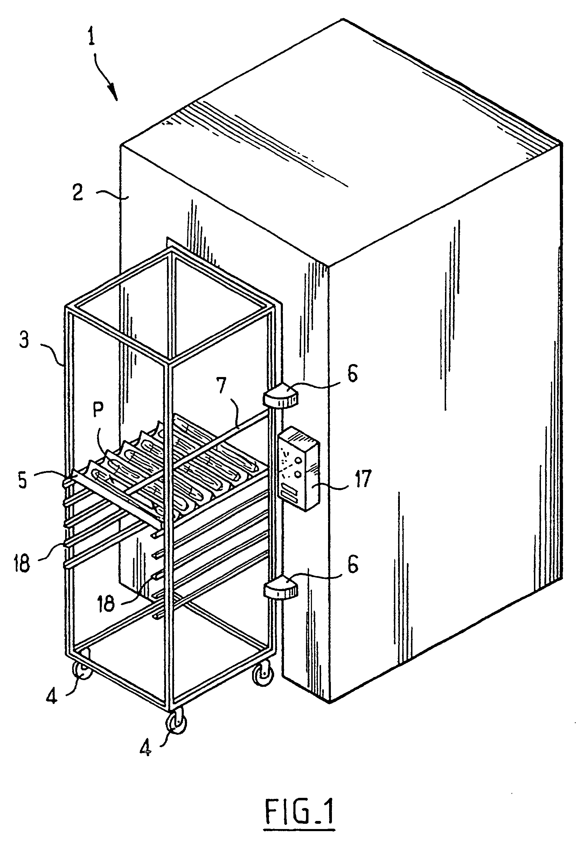

On a représenté sur la figure 1, un dispositif 1 conforme à l'invention.

Ce dispositif 1 présente une face frontale 2 devant laquelle on peut venir positionner un chariot 3 monté sur roulettes 4, portant une succession de plateaux 5 identiques présentant chacun des ondulations dans les creux desquelles sont disposés les pâtons P.

Les plateaux 5 sont supportés par des glissières latérales régulièrement espacées verticalement, l'intervalle entre les plateaux 5 étant compris par exemple entre 8 et 10,5 cm.

Dans un souci de clarté du dessin, on n'a représenté sur la figure 1 qu'un seul plateau 5.

La face frontale 2 du dispositif 1 est pourvue de moyens permettant de positionner le chariot 3 avec précision.

Ces moyens sont constitués par exemple par des butées 6 contre lesquelles on vient placer le montant arrière droit du chariot.

Le dispositif 1 comporte une pluralité de bras 7 dont seul l'un d'eux est représenté sur la figure 1 dans un souci de clarté du dessin ces bras 7 étant suffisamment plats pour pouvoir se déplacer entre les plateaux 5 au-dessus des rangées de pâtons P.

Lorsque le chariot 3 est convenablement positionné par rapport au dispositif 1, les arêtes séparant les creux dans lesquels sont logés les pâtons s'étendent perpendiculairement aux axes longitudinaux des bras 7.

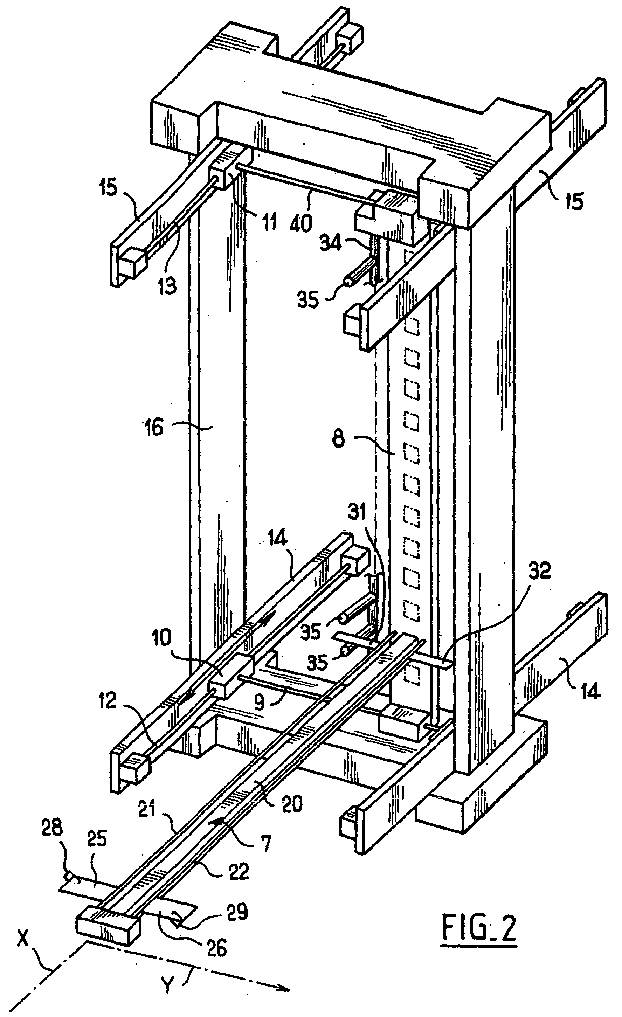

Comme on peut le voir sur la figure 2, chaque bras 7 est assujetti à une colonne 8, laquelle peut se déplacer dans deux directions perpendiculaires et horizontales, de préférence d'avant en arrière et latéralement.

On a matérialisé sur la figure 2 par des pointillés les zones de fixation sur la colonne 8 de chacun des bras 7.

Dans l'exemple de réalisation décrit, la colonne 8 est montée à déplacement à ses extrémités supérieure et inférieure sur des tiges filetées 9 et 40, elles-mêmes assujetties à leurs extrémités à des organes d'entraînement 10 et 11 se déplaçant le long de tiges filetées 12 et 13 parallèles à l'axe longitudinal X du bras 7 représenté.

Les tiges 12 et 13 sont fixées à leurs extrémités sur des poutres 14 et 15 solidaires d'un portique 16.

La colonne 8 porte des moteurs électriques qui engrènent sur les tiges 9 et 40 et permettent de la déplacer dans une direction Y parallèle à l'axe des tiges 9 et 40 et perpendiculaire à l'axe X.

Les organes d'entraînement 10 et 11 comportent des moteurs électriques permettant de déplacer les tiges 9 et 40 et donc la colonne 8 d'avant en arrière et inversement dans la direction de l'axe X.

Des moyens de commande 17 programmables sont reliés aux différents moteurs électriques pour provoquer le déplacement souhaité de la colonne 8 selon les axes X et Y.

Ces moyens de commande 17 peuvent être programmés de manière à faire accomplir à l'ensemble des bras 7 un mouvement particulier, comme cela sera décrit plus en détail dans la suite.

La course en profondeur de la colonne 8, c'est-à-dire son déplacement maximum d'avant en arrière et inversement, est choisie de manière à permettre aux bras 7 de s'engager suffisamment à l'intérieur du chariot 3 pour pouvoir scarifier l'ensemble des pâtons P posés sur le plateau 5.

De même, la course en déplacement latéral, c'est-à-dire parallèlement à l'axe Y, est choisie de manière à permettre de réaliser le nombre voulu d'entailles sur la longueur souhaitée des pâtons P.

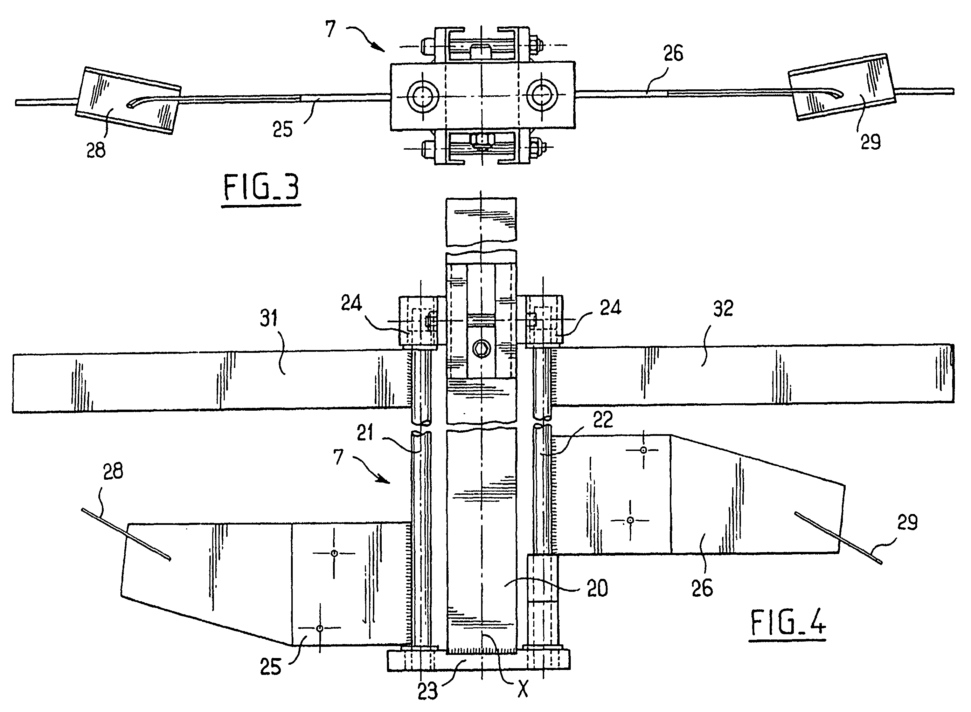

Chaque bras 7 comporte, comme représenté plus particulièrement sur les figures 3 et 4, une poutre centrale 20 et deux tiges de commande latérales parallèles 21 et 22 s'étendant de part et d'autre de la poutre 20 le long de celle-ci.

Du fait de la disposition particulière des tiges de commande 21 et 22, l'épaisseur maximum des bras 7 correspond sensiblement à l'épaisseur de la poutre 20, ce qui leur permet de s'engager entre les plateaux 5 du chariot 3.

Chaque tige de commande 21 ou 22 est montée à rotation à ses deux extrémités autour d'un axe géométrique de rotation parallèle à l'axe X.

Plus particulièrement, chaque tige de commande 21 ou 22 tourne à son extrémité avant dans un logement adapté d'un embout 23 fixé à l'extrémité avant de la poutre 20, et à l'arrière dans des logements adaptés 24 de la colonne 8.

Au voisinage de l'extrémité avant de chaque tige de commande 21, respectivement 22, est fixé un support de lame 25, respectivement 26, portant une lame 28, respectivement 29.

Les supports 25 et 26 sont décalés axialement le long de l'axe X, le support 25 situé à gauche sur les figures étant en avant de l'autre support 26.

A l'extrémité arrière des tiges 21 et 22 sont fixés des leviers de commande respectifs 31 et 32 s'étendant transversalement à l'axe X.

Lorsque les supports 25 et 26 sont horizontaux, les leviers de commande 31 et 32 le sont également et s'étendent dans le prolongement l'un de l'autre.

La colonne 8 comporte des moyens de relevage permettant de soulever sélectivement les leviers de commande 31 et 32, de manière provoquer l'entraînement en rotation vers le haut des lames 28 et 29.

Ces moyens de relevage sont constitués dans l'exemple décrit par deux tringles qui sont déplaçables verticalement sous l'action de mécanismes d'entraînement reliés aux moyens de commande 17 et non représentés.

On a représenté sur la figure 2, dans un souci de clarté du dessin, seulement la tringle 34 destinée à provoquer le déplacement simultané vers le haut de toutes les lames 28 des bras 7.

Cette tringle 34 comporte une pluralité d'ergots 35 formant saillie vers l'avant et constituant chacun une butée sur laquelle peut reposer un levier de commande 31.

Lorsque la tringle 34 est déplacée vers le haut, les ergots 35 provoquent le pivotement vers le haut des leviers de commande 31, lequel s'accompagne grâce aux tiges de commande 21 d'un déplacement en rotation vers le haut des supports 25, donc des lames 28.

Chaque levier de commande 31 ne faisant que reposer par son poids sur l'ergot 35 associé, chaque support 25 reste libre de se déplacer librement vers le haut lorsque la lame 28 qu'il porte tend à être sollicitée en déplacement vertical vers le haut.

Le mécanisme de relevage des lames 29 est similaire à celui qui vient d'être décrit pour les lames 28, et ne sera pas décrit davantage.

On remarquera à l'examen de la figure 4 que les lames 28 et 29 s'étendent vers l'extérieur au-delà des supports 25 et 26, en éloignement des tiges de commande associées 21 et 22.

Plus particulièrement, les lames 28 et 29 sont parallèles entre elles et inclinées par rapport à l'axe X de 40° environ.

Chaque lame de gauche 28 déborde du support 25 vers l'arrière tandis que chaque lame de droite 29 déborde du support 26 vers l'avant.

On comprend que tous les bras 7 ont le même mouvement et que les lames de gauche 28 sont simultanément relevées ou abaissées grâce la tringle 34.

Il en est de même pour les lames de droite 29 grâce à la tringle correspondante, similaire à la tringle 34, et non représentée sur le dessin.

Le fonctionnement du dispositif 1 est le suivant.

Le chariot 3 est amené avec l'ensemble des pâtons P posés sur les plateaux 5 situés à des hauteurs différentes devant la face frontale 2 du dispositif 1.

Les bras 7 sont alors complètement rétractés à l'intérieur du dispositif 1 et n'émergent pas hors de sa face frontale 2.

Les moteurs électriques engrénant sur les tiges filetées 8,9 et 12,13 sont commandés de manière adaptée à provoquer la sortie des bras 7 pour scarifier les pâtons.

La tringle associée aux leviers de commande 32 est relevée, de manière à ce que les lames de droite 29 passent au-dessus des pâtons P sans les toucher.

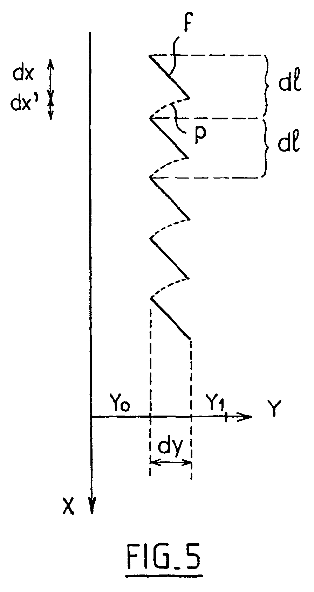

Les moyens de commande 17 agissent sur les différents moyens d'entraînement de manière à ce que la colonne 8 et la tringle 34 soient animées d'une succession de déplacements élémentaires dl, comme illustré sur la figure 5, pour que les lames de gauche 28 scarifient les pâtons P lors du mouvement aller des bras 7.

Lors du mouvement retour des bras 7, la tringle 34 est relevée pour que les lames de gauche 28 passent au-dessus des pâtons P sans les toucher, tandis que la colonne 8 et la tringle associée aux leviers de commande 32 sont animées d'une succession de déplacements élémentaires pour que les lames de droite 29 scarifient les pâtons P.

Lors du mouvement aller des bras 7, chaque déplacement élémentaire dl de la colonne 8 se décompose en une première phase s au cours de laquelle la colonne 8 effectue un premier déplacement combiné de la distance dx dans la direction de l'axe X et de la distance dy dans la direction de l'axe Y, selon une fonction Y = f(X), linéaire dans le cas présent, et en une deuxième phase p au cours de laquelle la colonne 8 effectue un deuxième déplacement combiné de la distance dx' dans le même sens selon l'axe X et de la distance dy dans le sens opposé selon la direction Y.

Lors de la première phase s, la tringle 34 est en position basse de manière à ce que chaque lame de gauche 28 puisse venir au contact d'un pâton P pour le scarifier.

La fonction Y = f(X) est choisie de sorte que la direction de déplacement des lames de gauche 28 soit sensiblement parallèle à la direction longitudinale des lames de gauche 28.

Durant le déplacement de la colonne 8, chaque lame de gauche 28 est libre de se déplacer verticalement relativement au bras 7, pour suivre le contour du pâton P à son contact.

A la fin de la phase s, la tringle 34 est relevée, tandis que la colonne 8 effectue durant la phase p le déplacement de la distance dx' dans le même sens selon l'axe X et de la distance dy dans le sens opposé selon l'axe Y, pour revenir à l'ordonnée Yo de départ.

Lorsque les bras 7 arrivent en fin de course aller, la tringle 34 est maintenue relevée, et les bras 7 effectuent leur mouvement de retour.

La scarification s'effectue alors avec les lame de droite 29, grâce à une succession de déplacements élémentaires, à l'instar de ce qui a été décrit plus haut.

Une fois que les bras 7 arrivent en fin de course retour, les lames de droite 29 sont relevées à nouveau et la colonne 8 est déplacée dans la direction Y d'une distance prédéterminée, puis le processus est recommencé avec une nouvelle ordonnée de départ Y₁.

On peut scarifier ainsi les pâtons P sur toute leur longueur.

Bien entendu, l'invention n'est pas limitée à l'exemple de réalisation qui vient d'être décrit.

On peut notamment n'utiliser qu'un seul bras 7, à condition de scarifier alors les pâtons plateau par plateau.

On comprend que la scarification des pâtons P est effectuée plus rapidement si l'on utilise une pluralité de bras 7 reproduisant le même mouvement.

Chaque bras ne peut comporter qu'une lame 28 ou 29, auquel cas la scarification des pâtons a lieu soit au cours du mouvement aller, soit au cours du mouvement retour.

On peut encore ajouter des outils de coupe supplémentaires aux bras 7 sans sortir du cadre de l'invention.

## Revendications

1. Ensemble comportant un chariot ayant des plateaux situés à des hauteurs différentes sur le chariot et un dispositif pour scarifier des pâtons de pain (P) ou analogues placés en rangées sur les plateaux (5) du chariot (3), et comportant au moins un bras (7) porteur d'au moins une lame (28;29) et assujetti à des moyens d'entraînement, des moyens de commande (17) pour commander les moyens d'entraînement de manière à déplacer dans deux directions perpendiculaires (X,Y) d'un plan horizontal la lame (28;29) sur les pâtons pour les scarifier, le bras (7) étant suffisamment plat pour pouvoir s'engager entre deux plateaux (5) successifs.

2. Ensemble selon la revendication 1, **caractérisé par le fait que** la lame (28;29) est montée avec une possibilité de déplacement vertical relatif par rapport au bras (7), de manière à pouvoir suivre le contour de chaque pâton (P) lorsqu'elle est déplacée à son contact.

3. Ensemble selon la revendication 2, **caractérisé par le fait qu'**il comporte des moyens de relevage (34) de la lame (28).

4. Ensemble selon la revendication 3, **caractérisé par le fait que** les moyens de commande (17) sont aptes à faire accomplir à la lame (28;29) une succession de déplacements élémentaires (dl), et **par le fait qu'**au cours de chaque déplacement élémentaire (dl) la lame (28) effectue un premier déplacement d'une distance (dx) prédéterminée dans une direction parallèle à l'axe longitudinal (X) du bras (7) et d'une distance prédéterminée (dy) dans une direction perpendiculaire (Y) à cet axe (X), la lame étant alors apte durant ce premier déplacement à venir au contact du pâton (P) pour le scarifier, la lame étant ensuite déplacée vers le haut et le bras soumis à un deuxième déplacement d'une distance prédéterminée (dy) de sens opposé dans la direction perpendiculaire (Y) à l'axe longitudinal (X) du bras (7) et d'une distance correspondant à l'espacement des pâtons (P) sur le plateau (5) et de même sens selon l'axe longitudinal (X) du bras.

5. Ensemble selon l'une quelconque des revendications précédentes, **caractérisé par le fait que** le bras (7) comporte deux lames (28;29) pouvant être commandées dans leur déplacement vertical indépendamment l'une de l'autre.

6. Ensemble selon l'une quelconque des revendications précédentes, **caractérisé par le fait que** chaque lame (28;29) est fixée sur un organe de support (25;26) pouvant pivoter librement vers le haut autour d'un axe de rotation parallèle à l'axe longitudinal (X) du bras (7).

7. Ensemble selon la revendication 6, **caractérisé par le fait que** chaque organe de support (25 ; 26) est assujetti à une tige de commande (21 ; 22) s'étendant le long du bras d'un côté de celui-ci.

8. Ensemble selon l'une quelconque des revendications précédentes, **caractérisé par le fait qu'**il comporte une pluralité de bras (7) identiques espacés verticalement et solidaires d'une colonne (8), ces bras (7) étant positionnés sur la colonne (8) de manière à s'engager entre les plateaux (5) du chariot (3), les moyens d'entraînement étant agencés de manière à pouvoir déplacer ladite colonne (8) dans deux directions (X,Y) perpendiculaires entre elles.

9. Ensemble selon les revendications 7 et 8, **caractérisé par le fait que** chaque tige de commande (21;22) est solidaire d'un levier de commande (31;32) s'étendant transversalement à son axe, et **par le fait que** la colonne (8) comporte au moins une tringle (34) déplaçable verticalement, cette tringle présentant des butées sur lesquelles sont aptes à reposer les leviers de commande des bras, de sorte que le déplacement vertical de la tringle vers le haut provoque l'entraînement en rotation de l'ensemble des leviers de commande dans le même sens et le déplacement vers le haut de toutes les lames situées d'un même côté des bras (7).

10. Procédé pour scarifier une pluralité de pâtons (P) disposés sur des plateaux (5) situés à des hauteurs différentes sur un chariot (3), comportant les étapes consistant à :
- amener le chariot (3) dans une position relative prédéterminée par rapport à un dispositif (1) comportant une pluralité de bras (7) identiques espacés verticalement et portés par une colonne (8), cette colonne (8) étant assujettie à des moyens d'entraînement permettant de la déplacer dans deux directions horizontales (X,Y), perpendiculaires entre elles, le dispositif (1) comportant en outre des moyens de commande pour commander le déplacement de la colonne (8), chaque bras (7) comportant une première lame (28) et une deuxième lame (29) et étant suffisamment plat pour pouvoir s'engager entre deux plateaux (5) successifs du chariot (3), chacune des lames (28;29) d'un bras étant assujettie à une extrémité d'une tige de commande (21;22) s'étendant le long du bras (7) d'un côté de celui-ci, cette tige étant munie à l'autre extrémité d'un levier de commande (31,32) s'étendant transversalement à son axe, la colonne (8) comportant des première et deuxième tringles (34) déplaçables verticalement indépendamment l'une de l'autre et présentant chacune des butées (35) sur lesquelles reposent les leviers de commande respectifs (31;32), le déplacement vertical des première et deuxième tringles vers le haut provoquant l'entraînement en rotation des leviers de commande respectifs et le déplacement vertical des première et deuxième lames respectivement,
- commander le déplacement de la colonne (8) en rapprochement du chariot (3),
- déplacer la deuxième tringle de manière à ce que les deuxièmes lames (29) soient suffisamment hautes pour ne pas venir au contact des pâtons (P) posés sur les plateaux (5),
- scarifier les pâtons à l'aide des premières lames (28) en effectuant une succession de déplacements élémentaires (dl) au cours desquels les premières lames (28) viennent au contact des pâtons,
- puis, au cours du mouvement de retour de la colonne (8), déplacer vers le haut la première tringle (34) de manière à ce que les premières lames (28) soient suffisamment hautes pour ne pas venir au contact des pâtons,
- scarifier les pâtons à l'aide des deuxièmes lames (29) en effectuant une succession de déplacements élémentaires au cours desquels les deuxièmes lames viennent au contact des pâtons.

## Patentansprüche

1. Anordnung, umfassend einen Rollwagen (3) mit Tabletts (5), welche auf verschiedenen Höhen auf dem Rollwagen (3) angeordnet sind, sowie eine Vorrichtung (1) zum Einritzen von auf den Tabletts (5) des Rollwagens (3) in Reihen angeordneten Brotteigrohlingen (P) oder dergleichen, und zumindest einen wenigstens eine Messerklinge (28, 29) aufweisenden Trägerarm (7), welchem Antriebsmittel mit Steuerungsmitteln (17) zur Steuerung desselben in der Weise zugeordnet sind, dass die Messerklingen (28, 29) in zwei zueinander senkrechten Richtungen (X, Y) auf einer horizontalen Ebene auf den Teigrohlingen (P) zum Einritzen verschiebbar sind, wobei der Trägerarm (7) ausreichend flach ausgebildet ist, um zwischen zwei aufeinanderfolgenden Tabletts (5) einzugreifen.

2. Anordnung gemäß Anspruch 1, **dadurch gekennzeichnet, dass** die Messerklingen (28, 29) mit Mitteln zur vertikalen Verstellung relativ zum Trägerarm (7) befestigt sind, so dass sie den Konturen jedes Teigrohlings (P) bei Kontakt folgen können.

3. Anordnung gemäß Anspruch 2, **dadurch gekennzeichnet, dass** sie eine Hebevorrichtung (34) der Messerklinge (28) umfasst.

4. Anordnung gemäß Anspruch 3, **dadurch gekennzeichnet, dass** die Steuerungsmittel (17) die Messerklingen (28, 29) zur Abfolge von Grundbewegungen (d1) beaufschlagen, und dass im Laufe jeder Grundbewegung (d1) die Messerklinge (28) zuerst eine Verschiebung über eine vorgegebene Entfernung (dx) in einer parallelen Richtung zur Längsachse (X) des Trägerarms (7) und über eine vorgegebene Entfernung (dy) in einer senkrechten Richtung (Y) auf dieser Achse (X) durchführt, wobei die Messerklinge (28) während dieser ersten Verschiebung mit dem Teigrohling (P) in Berührung kommt, um ihn einzuritzen, die Messerklinge (28) dann nach oben wegbewegt wird und der Trägerarm dann eine zweite Bewegung über eine vorgegebene Entfernung (dy) entgegengesetzt in senkrechter Richtung (Y) zur Längsachse (X) des Trägerarms (7) durchführt, welche mit dem Abstand der Teigrohlinge (P) auf dem Tablett (5) korrespondiert und entlang der Längsachse (X) des Trägerarms erfolgt.

5. Anordnung gemäß irgendeiner der vorgenannten Ansprüche, **dadurch gekennzeichnet, dass** der Trägerarm (7) zwei Messerklingen (28, 29) aufweist, die in ihren vertikalen Bewegungen unabhängig voneinander steuerbar sind.

6. Anordnung gemäß irgendeiner der vorgenannten Ansprüche, **dadurch gekennzeichnet, dass** jede Messerklinge (28, 29) auf einem Trägerelement (25, 26) befestigt ist, welches frei nach oben um eine Rotationsachse parallel zur Längsachse (X) des Trägerarms (7) drehbar ist.

7. Anordnung gemäß Anspruch 6, **dadurch gekennzeichnet, dass** jedes Trägerelement (25, 26) mit einer einseitig am Trägerarm (7) angeordneten Steuerstange (21, 22) verbunden ist.

8. Anordnung gemäß irgendeiner der vorgenannten Ansprüche, **dadurch gekennzeichnet, dass** sie eine Vielzahl von Trägerarmen (7) mit gleichen vertikalen Abständen aufweist, welche mit einer Säule (8) fest verbunden sind, wobei die Trägerarme (7) so auf der Säule (8) angeordnet sind, dass sie zwischen die Tabletts (5) des Rollwagens (3) eingreifen können, wobei die Antriebsmittel so angeordnet sind, dass sie die genannte Säule (8) in zwei Richtungen (X, Y) senkrecht zueinander bewegen.

9. Anordnung gemäß den Ansprüchen 7 und 8, **dadurch gekennzeichnet, dass** jede Steuerstange (21, 22) mit einem Steuerhebel (31, 32) fest verbunden ist, weicher sich quer zu seiner Achse erstreckt, und dass die Säule (8) mindestens eine vertikal verstellbare Stange (34) als Anschlag aufweist, auf welchem die Steuerhebel der Trägerarme anlegbar sind, so dass eine vertikale Bewegung der Stange nach oben eine Drehbewegung der Anordnung der Steuerhebel in die gleiche Richtung und eine Bewegung aller Messerklingen auf dem gleichen Trägerarm (7) nach oben erzeugt.

10. Verfahren zum Einritzen einer Vielzahl von Teigrohlingen (P), die auf Tabletts (5) auf verschiedenen Höhen auf dem Rollwagen (3) angeordnet sind und das die folgenden Verfahrensschritte aufweist:
- Heranführen des Rollwagens (3) in eine entsprechende Position, die vorgegeben wird durch eine Vorrichtung (1), die eine Vielzahl von Trägerarmen (7) mit gleichen vertikalen Abständen aufweist, die von einer Säule (8) getragen werden,
wobei die Säule (8) verbunden ist mit Antriebsmitteln, die eine Bewegung in zwei horizontale, senkrecht zueinander befindliche Richtungen (X, Y) ermöglicht, wobei die Vorrichtung (1) darüber hinaus Steuereinheiten zur Steuerung der Bewegung der Säule (8) aufweist, wobei jeder Trägerarm (7) eine erste Messerklinge (28) und eine zweite Messerklinge (29) aufweist und ausreichend flach ist, um zwischen zwei aufeinanderfolgende Tabletts (5) des Rollwagens (3) einzugreifen, wobei jede der Messerklingen (28, 29) eines Trägerarmes mit dem Ende einer Steuerstange (21;22) verbunden ist, die sich entlang des Trägerarms (7) auf einer Seite erstreckt, wobei diese Stange am anderen Ende mit einem Steuerhebel (31, 32) versehen ist, der sich quer zu seiner Achse erstreckt, wobei die Säule (8) eine erste und zweite Stangen (34) aufweist, die vertikal unabhängig voneinander beweglich sind und jede Stange Anschläge (35) aufweist, auf den die entsprechenden Steuerhebel (31, 32) aufliegen, wobei die vertikale Bewegung der ersten und zweiten Stangen nach oben eine rotierende Bewegung der entsprechenden Steuerhebel und entsprechend die vertikale Bewegung der ersten und zweiten Messerklingen erzeugt;
- Steuerung der Bewegung der Säule (8) durch Heranführen des Rollwagens (3);
- Bewegung der zweiten Stange in der Art und Weise, dass die zweiten Messerklingen (29) ausreichend hoch angeordnet sind, um nicht mit den Teigrohlingen (P) auf den Tabletts (5) in Berührung zu kommen;
- Einritzen der Teigrohlinge mit Hilfe der ersten Messerklingen (28) indem eine Abfolge von Grundbewegungen (d1) durchgeführt wird, in deren Verlauf die ersten Messerklingen (28) in Berührung mit den Teigrohlingen kommen;
- Bewegung der ersten Stange (34) nach oben im Verlauf der Rückbewegung der Säule (8), in der Art und Weise, dass die ersten Messerklingen (28) ausreichend - hoch angeordnet sind, um die Teigrohlinge nicht zu berühren;
- Einritzen der Teigrohlinge mit Hilfe der zweiten Messerklingen (29) indem eine Abfolge von Grundbewegungen durchgeführt wird, in deren Verlauf die zweiten Messerklingen in Berührung mit den Teigrohlingen kommen.

## Claims

1. Assembly comprising a trolley having trays situated at different heights on the trolley and a device to scarify pieces of bread dough (P) or the like placed in rows on the trays (5) of the trolley (3) and comprising at least one arm (7) carrying at least one blade (28; 29) and fixed to drive means, control means (17) for controlling the drive means so as to displace the blade (28; 29) in two perpendicular directions (X, Y) of a horizontal plane over the pieces of dough to scarify them, the arm (7) being sufficiently flat to be able to engage between two successive trays (5).

2. Assembly according to claim 1, **characterised in that** the blade (28; 29) is mounted with a possibility of vertical displacement relative to the arm (7) so as to be able to follow the contour of each piece of dough (P) when it is displaced on contact therewith.

3. Assembly according to claim 2, **characterised in that** it comprises raising means (34) for the blade (28).

4. Assembly according to claim 3, **characterised in that** the control means (17) are capable of causing the blade (28; 29) to perform a succession of elementary displacements (d1), and **in that**, during each elementary displacement (d1), the blade (28) effects a first displacement by a predetermined distance (dx) in a direction parallel to the longitudinal axis (X) of the arm (7) and by a predetermined distance (dy) in a direction (Y) perpendicular to this axis (X), the blade thus being capable of coming into contact with the piece of dough (P) so as to scarify it, during this first displacement, the blade then being displaced upwardly and the arm being subjected to a second displacement by a predetermined distance (dy) in the opposite direction in the direction (Y) perpendicular to the longitudinal axis (X) of the arm (7) and by a distance corresponding to the spacing between the pieces of dough (P) on the tray (5) and in the same direction along the longitudinal axis (X) of the arm.

5. Assembly according to any of the preceding claims, **characterised in that** the arm (7) comprises two blades (28; 29) which may be controlled independently of one another in their vertical displacement.

6. Assembly according to any of the preceding claims, **characterised in that** each blade (28; 29) is fixed on a support member (25; 26) capable of pivoting freely upwardly about an axis of rotation parallel to the longitudinal axis (X) of the arm (7).

7. Assembly according to claim 6, **characterised in that** each support member (25 ; 26) is fixed to a control rod (21; 22) extending along the arm on one side thereof.

8. Assembly according to any of the preceding claims, **characterised in that** it comprises a plurality of vertically spaced identical arms (7) which are integral with a column (8), these arms (7) being positioned on the column (8) so as to engage between the trays (5) of the trolley (3), the drive means being arranged so as to be able to displace said column (8) in two mutually perpendicular directions (X, Y).

9. Assembly according to claims 7 and 8, **characterised in that** each control rod (21; 22) is integral with a control lever (31; 32) extending transversely to its axis and **in that** the column (8) comprises at least one vertically displaceable bar (34), this bar having stops on which the arm control levers are capable of resting so that the upward vertical displacement of the bar causes the setting into rotation of all the control levers in the same direction and the upward displacement of all the blades situated on the same side of the arms (7).

10. Method for scarifying a plurality of pieces of dough (P) disposed on trays (5) situated at different heights on a trolley (3) comprising the stages consisting of:
- bringing the trolley (3) into a predetermined position relative to a device (1) comprising a plurality of vertically spaced identical arms (7) carried by a column (8), this column (8) being fixed to drive means which enable it to be displaced in two mutually perpendicular horizontal directions (X, Y), the device (1) further comprising control means for controlling the displacement of the column (8), each arm (7) comprising a first blade (28) and a second blade (29) and being sufficiently flat to be able to engage between two successive trays (5) of the trolley (3), each of the blades (28; 29) of an arm being fixed to one end of a control rod (21; 22) extending along the arm (7) on one side thereof, this rod being equipped at its other end with a control lever (31, 32) extending transversely to its axis, the column (8) comprising first and second bars (34) which are vertically displaceable independently of one another and each have stops (35) on which the respective control levers (31; 32) rest, the upward vertical displacement of the first and second bars causing the setting into rotation of the respective control levers and the vertical displacement of the first and second blades respectively,
- controlling the displacement of the column (8) toward the trolley (3),
- displacing the second bar so that the second blades (29) are sufficiently high to avoid coming into contact with the pieces of dough (P) placed on the trays (5),
- scarifying the pieces of dough by means of the first blades (28) while effecting a succession of elementary displacements (d1) during which the first blades (28) come into contact with the pieces of dough,
- then, during the return movement of the column (8), upwardly displacing the first bar (34) so that the first blades (28) are sufficiently high to avoid coming into contact with the pieces of dough,
- scarifying the pieces of dough by means of the second blades (29) while effecting a succession of elementary displacements during which the second blades come into contact with the pieces of dough.
